# EUROPÄISCHE PATENTSCHRIFT

(11) **EP 1 544 186 B1**
(45) Veröffentlichungstag und Bekanntmachung des Hinweises auf die Patenterteilung: **10.11.2010**
(21) Anmeldenummer: 04028819.3
(22) Anmeldetag: 06.12.2004
(51) Int. Cl.: C05F 17/02, F26B 9/10

(54) **Belüftungssystem**
Aeration system
Système d'aération

(30) Priorität: 17.12.2003 DE 20319607 U
(43) Veröffentlichungstag der Anmeldung: 22.06.2005
(73) Patentinhaber: HAURATON GmbH & Co. KG, 76437 Rastatt (DE)
(72) Erfinder: Naujoks, Volker, 76476 Bischweier (DE)
(74) Vertreter: Geitz Truckenmüller Lucht

(56) Entgegenhaltungen:
- DE-A1- 3 938 712
- DE-C1- 19 607 789
- FR-A- 2 675 981
- GB-A- 1 547 986
- GB-A- 1 582 203

## Beschreibung

Die Erfindung betrifft ein Belüftungssystem zur gesteuerten und/oder geregelten Belüftung von einem Trocknungsgut mit wenigstens einem luftdurchströmbaren Belüftungskanal mit einer gelochten Abdeckung, deren Lochbild mittels verschließbarer Stopfen veränderlich ist.

Ein derartiges Belüftungssystem ist aus der DE 196 07 789.3-41 vorbekannt.

Mit Hilfe des vorbekannten Belüftungssystem ist es möglich, die Verrottungsgeschwindigkeit eines Kompostguts innerhalb einer Kompostierungsanlage durch eine gesteuerte Belüftung mittels entsprechender Belüftungskanäle zu erhöhen. Die dem zu belüftenden Gut, also etwa einem Kompost oder einem sonstigen Industriegut oder Schüttgut, zum Zwecke der Trocknung oder Entfeuchtung zugeordnete Belüftung besteht im Wesentlichen aus einem Kanalnetz, das im Wesentlichen aus entsprechenden Belüftungsrinnen gebildet war, auf die Rinnenabdeckungen aufgesetzt waren, durch die die zur Belüftung eingeleitete Luft entweichen konnte. Hierzu wurde im Rahmen der vorbekannten Lösung vorgeschlagen, das Lochbild dieser Abdeckungen an das jeweilige Trocknungsgut anzupassen, indem mittels entsprechender Stopfen, die in die Löcher dieser Rinnenabdeckungen bedarfsweise einsetzbar sind und die übrigens auch wieder entfernt werden können, die Luftzufuhr angepasst wurde. So ist es beispielsweise ermöglicht, nur die Bereiche, auf denen tatsächlich entsprechendes Trocknungsgut angeordnet ist, mit einer entsprechenden Belüftung zu beaufschlagen, wobei in anderen Bereichen, die beispielsweise inzwischen abgeräumt sind, die Belüftungslöcher geschlossen werden können. Hierdurch wird die überflüssige energie- und formintensive Belüftung in nicht mehr benötigten Bereichen vermieden. Eine derartige Belüftung hat den Vorteil individuell an die jeweiligen Trocknungsbedingungen angepasst werden zu können und darüber hinaus mit einem minimalen Energieeinsatz arbeiten zu können.

Dabei sind derartige Belüftungskanäle erheblichen Belastungen ausgesetzt. So müssen im Bereich industrieller oder landwirtschaftlicher Trocknungsanlagen derartige Belüftungssysteme so ausgestaltet werden, dass sie jeweils mit schweren Industriefahrzeugen befahrbar sind. Die Rinnenunterteile und ihre Rinnenabdeckungen müssen daher so ausgestaltet werden, dass sie diesen höchsten Belastungsanforderungen standhalten können. Darüber hinaus ist das zur Ausbildung des Belüftungssystem eingesetzte Material gegebenenfalls aggressiven Medien ausgesetzt, die bekanntlich bei der Lagerung, Kompostierung oder Trocknung von landwirtschaftlichem oder industriellem Lagergut anfallen können.

Ausgehend von diesem Stand der Technik liegt der Erfindung die Aufgabe zugrunde, ein Belüftungssystem zu schaffen, das die Vorteile der aus dem Stand der Technik bekannten Anlage beibehält, aber gleichzeitig Fertigungsvorteile und zusätzliche Freiheiten hinsichtlich der Dimensionierung und der Materialauswahl zum Aufbau des Belüftungssystems bietet.

Gemäß den Merkmalen des Hauptanspruchs wird ein Belüftungssystem vorgeschlagen, das sich dadurch auszeichnet, dass die Rinnenabdeckung lastabtragend ausgesteift ist. Die lastabtragende Aussteifung der Rinnenabdeckung ermöglicht es, die in das Belüftungssystem, insbesondere in die Belüftungskanäle, etwa beim Überfahren der Belüftungskanäle mit Schwerlastfahrzeugen eingeleiteten Kräfte in den Verlegegrund und in die Verlegeumgebung abzuleiten mit der Folge, dass die unter der Abdeckung angeordneten Belüftungskanäle entsprechend schwächer dimensioniert werden können. Darüber hinaus kann auch der Übergang der Abdeckung zu den Belüftungskanälen einfacher gestaltet werden.

In konkreter Ausgestaltung weist die einen jeweiligen Belüftungskanal gegenüber dem zu trocknenden Gut abschließende Abdeckung beidseits seitlich ausgestellte Seitenschürzen zu einer kraftschlüssigen Verbindung mit dem Verlegegrund und/oder der Verlegeumgebung auf. Die über die Abdeckung des Belüftungskanal eingeleiteten Kräfte werden somit in den Verlegegrund und oder die Verlegeumgebung abgeleitet.

Die Installation des Kanals oder einer Rinne unterhalb der erwähnten Abdeckung kann daher weitgehend unabhängig von der eingeleiteten Belastung erfolgen.

In konkreter Ausgestaltung wird dies dadurch gelöst, dass die Abdeckung beidseits mit seitlich ausgestellten Seitenschürzen versehen ist, die über den Belüftungskanal seitlich überstehen und somit eine kraftschlüssige Verbindung mit dem Verlegegrund und/oder der Verlegeumgebung eingehen.

Die Rinnenabdeckung liegt im Übrigen formschlüssig auf der Rinnenwandung auf, wobei der Formschluss sicherstellt, dass kein Trockengut ungewollt in den Belüftungskanal oder die Belüftungsrinne eindringt.

In konkreter Ausgestaltung weist die Rinnenabdeckung einen im Wesentlichen U-förmigen Querschnitt auf, wobei eine Besonderheit der Rinnenabdeckung darin besteht, dass sie nicht plan mit der Offenseite des Rinnenunterteils abschließt, sondern vielmehr sich eine Abdeckplatte der Rinnenabdeckung über die eigentliche Rinnenunterteilöffnung erhebt und dementsprechend zumindest um die Breite der Seitenwandungen der Rinnenabdeckung beabstandet von der Rinnenzarge angeordnet ist.

Die hierdurch beschriebene Erhöhung oder der Überstand der Rinnenabdeckung über den Zargenbereich des jeweils unter der Rinnenabdeckung angeordneten Rinnenunterteils dient einer verbesserten Einleitung der in die Rinnenabdeckung eingeleiteten Kräfte in den Verlegegrund oder die Verlegeumgebung, da die insoweit oberseitig überstehende Abdeckung von dem Verlegegrund ringsum umschlossen und dabei die jeweils seitlich überstehende Seitenschürzen vom Verlegegrund form- und kraftschlüssig eingefasst sind.

In einer vorteilhaften Ausgestaltung der Rinnenabdeckung verfügt diese über schräg angestellte Seitenwandungen. Dies stellt zunächst für eine erleichterte Entformbarkeit der oftmals in einem Gussverfahren hergestellten Rinnenabdeckungen sicher und bietet weitere Vorteile hinsichtlich der Kraftableitung in den Verlegegrund bzw. die Verlegeumgebung.

Die an die Seitenwandungen der Rinnenabdeckungen angrenzenden Seitenschürzen sind überdies mit Durchbrechungen versehen, die dazu dienen, eine dauerhafte und kraftschlüssige Verbindung der Seitenschürzen mit dem Verlegegrund oder der Verlegeumgebung sicherzustellen. Für den Fall, dass die Rinnenabdeckung beispielsweise in ein Betonbett eingegossen wird, werden die genannten Durchbrechungen von dem Beton durchdrungen, so dass dabei eine kraft- und formschlüssige Verbindung der Seitenschürzen mit dem Verlegegrund gegeben ist.

Darüber hinaus kann das Rinnenunterteil mit der jeweiligen Rinnenabdeckung in an sich bekannter Weise verschraubt werden, wobei die entsprechenden Schrauben entweder im Bereich der Seitenschürzen oder durch eine weitgehend zentrale Verschraubung mittels eines quer über das Rinnenunterteil verlaufenden Befestigungsknebels erfolgen kann.

Die Belüftungskanäle werden im Rahmen des erfindungsgemäßen Belüftungssystems mit einem Gebläse oder einer Vakuumpumpe verbunden, so dass entweder Druckluft oder ein Vakuum in die Belüftungskanälen eingeleitet werden kann mit der Folge, dass durch die entsprechenden Löcher der Abdeckplatten Luft angesaugt oder ausgeblasen wird.

Die Löcher der Abdeckplatte können dabei mit entsprechenden Stopfen bedarfsweise verschlossen werden und so das mittels der Abdeckplatten erzeugte Lochbild an die jeweiligen Erfordernisse des Trocknungsgutes in optimaler Weise anpassen zu können.

In vorteilhafter Ausgestaltung können die Stopfen zum Verschluss der Be- oder Entlüftungslöcher ihrerseits mit Löchern versehen sein. Es besteht also neben der Möglichkeit, die Löcher insgesamt zu verschließen auch die Alternative, einen Stopfen mit einem Loch einzusetzen, um so das entsprechend verschlossene Loch lediglich in seinem Durchmesser zu reduzieren, dessen Strömungsquerschnitt somit verengt ist. Die Verwendung von Stopfen mit Löchern stellt somit eine zusätzliche Variationsmöglichkeit für das mit dem Belüftungssystem gebildete Lochbild dar.

Nachdem die Rinnenabdeckung eine vollständige Ableitung der eingeleiteten Kräfte auf den Verlegegrund und/oder die Verlegeumgebung gewährleistet, kann die Dimensionierung der Rinnenabdeckung und des darunter angeordneten Rinnenunterteils durchaus unterschiedlich ausfallen. In einer bevorzugten Ausgestaltung ist die Rinnenabdeckung aus Metall in einem Gussverfahren gefertigt, während die Rinne als Kunststoffrinne ausgebildet ist. Eine Kunststoffrinne hat den Vorteil einer kostengünstigeren Fertigung und vor allem eines geringeren Transport- und Lagergewichtes. Die als Gussteil gefertigte Abdeckung kann die erforderlichen Kräfte aufnehmen und ableiten.

Sollten die Rinnenunterteile aus Kunststoff gefertigt sein, bietet sich als weitere vorteilhafte Ausgestaltung an, die Rinnen vorzugsweise werkseitig im Bereich der Stoßfugen miteinander zu längeren Rinnen zu verschweißen. Hierdurch können umständlich Dichtvorgänge auf der Baustelle vermieden und längere Rinnen gefertigt werden. Bei richtigem Verständnis dieser Lösung bedeutet dies auch, dass die Länge der Rinnenunterteile und der Rinnenabdeckungen durchaus auch voneinander entkoppelt werden kann, wobei dies zur Folge hat, dass die Anzahl der ansonsten abzudichtenden Stoßfugen über die Länge des Belüftungskanals deutlich reduziert ist.

Die übrigen Stoßfugen von Rinne zu Rinne und von Abdeckung zu Abdeckung werden mit Vorteil jeweils unter Zwischenlage einer entsprechenden Dichtung geschlossen.

Als zusätzliche Montagehilfe ist die zur Ausbildung eines Belüftungskanals vorgesehene Rinne mit einer quer zur Längserstreckung des Rinnenunterteils angeordnete Fußlasche versehen, die das Rinnenunterteil besser in der jeweiligen Relativposition zum Verlegegrund fixiert. Jedenfalls kann die etwa als Bandeisen ausgebildete Lasche zusätzlich mit dem Verlegegrund verschraubt oder sonstig verbunden werden. Die Lasche sitzt in vorteilhafter Ausgestaltung formschlüssig zwischen der Außenverrippung des Rinnenunterteils, so dass das Rinnenunterteil ebenfalls in dieser Relativposition mit dieser Fußlasche festgelegt ist.

In vorteilhafter Ausgestaltung können die Belüftungskanäle zu einem weitverzweigten Belüftungssystem ausgebaut werden, das aus mehreren mit einander kommunizierenden Röhren oder Kanälen besteht. Hierzu ist es sinnvoll, dass die die Belüftungskanäle ausbildenden Rinnen stirn- und/oder seitenwandseitig mit entsprechenden Rohranschlussstutzen zum Anschluss von Verlängerungs- und/oder Verzweigungsrohren versehen sind.

In vorteilhafter Ausgestaltung können die entsprechenden Verzweigungen mittels dem Rohranschlussstutzen in einfacher Weise unter Zwischenlage von Reduzierstücken strömungsdicht angeschlossen werden. Dabei können die Verbindungsstellen mittels geeigneter Muffenelemente abgedichtet werden.

Die Verbindung von Rinnenunterteil zu Rinnenabdeckung kann vorzugsweise mittels einer Spritzdichtung luftdicht verschlossen werden.

In vorteilhafter Ausgestaltung sind die Belüftungskanäle mit Revisionsöffnungen versehen oder an ein entsprechendes Schachtsystem angeschlossen. Hierdurch können etwaige Verstopfungen beseitigt werden und/oder das System von Zeit zu Zeit gespült oder einfach gewartet werden.

Die Erfindung wird nachstehend anhand eines in der Zeichnung nur schematisch dargestellten Ausführungsbeispiels näher erläutert.

Es zeigen:
- Fig. 1:: ein Belüftungssystem mit Belüftungskanälen in einer schematischen Draufsicht,
- Fig. 2:: einen Belüftungskanal mit einer Rinne und einer Rinnenabdeckung in einer perspektivischen Darstellung,
- Fig. 3:: die in Fig. 2 gezeigte Rinnenabdeckung in einer Detailansicht und perspektivischer Darstellung,
- Fig. 4:: die Rinne mit Rinnenabdeckung gemäß Fig. 2 und Fig. 3 in einer perspektivischen Ansicht von schräg unten,
- Fig. 5:: ein Detail der in Fig. 4 dargestellten Rinne mit Rinnenabdeckung in einem perspektivischen Ausschnitt,
- Fig. 6:: eine Rinnenabdeckung in einer perspektivischen Draufsicht,
- Fig. 7:: ein Detail der in Fig. 6 gezeigten Rinnenabdeckung in einer perspektivischen Detailansicht und
- Fig. 8:: eine perspektivische Darstellung zur Verbindung von Belüftungskanälen zur Ausbildung eines Belüftungssystems.

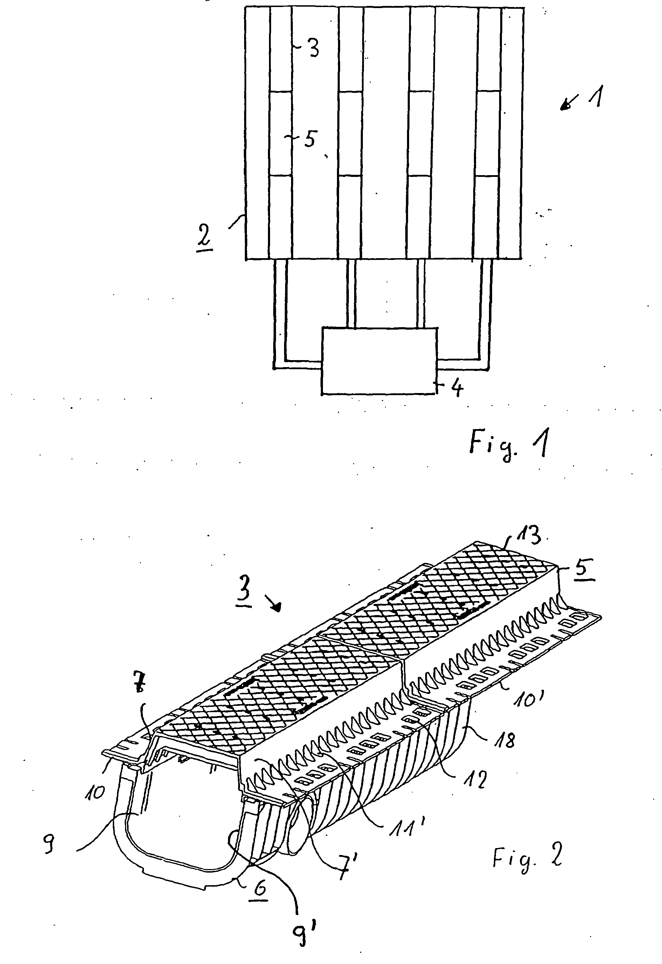

Das in Figur 1 gezeigte Belüftungssystem 1 besteht im Wesentlichen aus mehreren Belüftungskanälen 3, die mit Rinnenabdeckungen 5 versehen sind und zur Belüftung oder Trocknung eines Trocknungsguts unter einer Lagerfläche 2 angeordnet sind. Den Belüftungskanälen 3 ist dabei ein Gebläse oder eine Vakuumpumpe 4 zugeordnet, um die Belüftungskanäle 3 mit einer ansaugenden oder ausströmenden Luftströmung zu versorgen.

Das auf der Lagerfläche 2 abgelegte Trocknungsgut kann somit über das Belüftungssystem 1 einer steuerbaren Belüftung oder Entlüftung ausgesetzt werden. Hierzu bestehen die Belüftungskanäle 3 gemäß der Darstellung in Figur 2 im Wesentlichen aus einem Rinnenunterteil 6, das gegenüber dem Trocknungsgut mit einer Rinnenabdeckung 5 abgedeckt ist. Die Rinnenabdeckung 5 hat dabei im Wesentlichen ein U-förmiges Querschnittprofil und ist beidseits von zwei Seitenwandungen 7, 7' begrenzt. Die Seitenwandungen 7, 7' sind gegenüber einer gedachten Lotrechten schräg angestellt und gehen in dem, dem Rinnenunterteil 6 zugewandten, Bereich in eine seitlich ausgestellte Seitenschürze 10, 10' über, wobei der Übergangsbereich der Seitenwandung 7, 7' in die Seitenschürze 10, 10' außenseitig jeweils mit Aussteifungswinkeln 11, 11' zusätzlich versteift ist. In den seitlich über das Rinnenunterteil 6 überstehenden Bereichen der Seitenschürzen 10, 10' sind Durchbrechungen 12, 12' zur kraft- und formschlüssigen Verbindung mit einem hier nicht weiter dargestellten Verlegegrund vorgesehen.

Bei bestimmungsgemäßer Montage werden die aus dem Rinnenunterteil 6 und der Rinnenabdeckung 5 gebildeten Belüftungskanäle 3 derart in den Boden eingelassen, dass eine, der Offenseite des Rinnenunterteils bzw. der Rinnenabdeckung 5 bzw. 6 gegenüberliegende, Abdeckplatte 13 des Belüftungskanals 3 zumindest im Wesentlichen mit einem, den Belüftungskanal 3 umgebenden Verlegegrund, plan abschließt. Demnach ist auch die Rinnenabdeckung 5 in diesen Verlegegrund eingelassen, wobei die Seitenschürzen 10, 10' sich gegenüber dem nicht weiter dargestellten Verlegegrund derart abstützen, dass die Rinnenabdeckungen 5 im Übrigen nur formschlüssig auf die entsprechenden Rinnenunterteile 6 aufgesetzt sind.

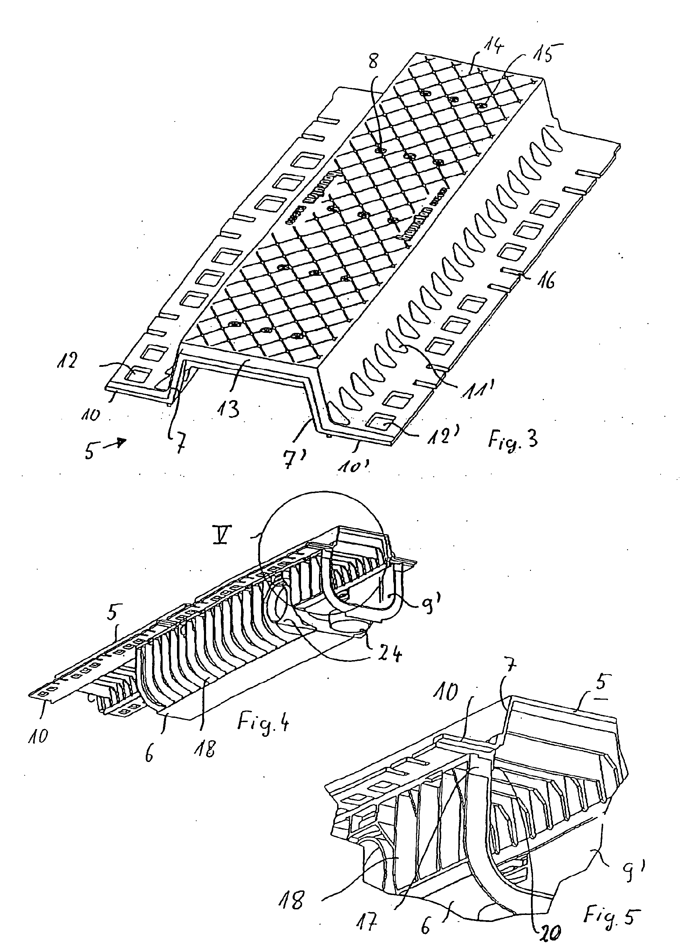

Eine genauere Darstellung der Rinnenabdeckung 5 ist in Figur 3 gegeben. Hier ist zunächst auf die Abdeckplatte 13 der Rinnenabdeckung 5 einzugehen. Die von den Seitenwänden 7, 7' der Rinnenabdeckung 5 in ihrer seitlichen Ausdehnung begrenzte Abdeckplatte 13 weist auf ihrer der Offenseite der Rinnenabdeckung 5 abgewandten Oberseite der Abdeckplatte 13 eine Profilierung 14 auf, die einem möglichen Aquaplaning beim Überfahren der Rinnenabdeckung 5 entgegenwirken soll.

Die Abdeckplatte 13 ist dabei mit Lüftungslöchern 15 versehen, die mit speziellen Stopfen 8, vorzugsweise aus Kunststoff, bedarfsweise verschließbar und wieder zu öffnen sind. Mit den Stopfen 8 kann das Lochbild der Abdeckplatten 13 an den jeweiligen Lüftungsbedarf des Trocknungsguts in optimaler Weise angepasst werden. In vorteilhafter Ausgestaltung können die Stopfen 8 ihrerseits mit Löchern versehen sein, so dass die Lüftungslöcher 15 nicht nur bedarfsweise verschlossen, sondern gegebenenfalls auch in ihrem Lochquerschnitt reduzierbar sind.

Darüber hinaus ist aus Figur 3 sehr gut ersichtlich, dass die Seitenschürzen 10, 10' mit seitlichen Schraubschlitzen 16 versehen sind, um die Abdeckung 5 mit dem jeweiligen Rinnenunterteil 6 mittels entsprechender Befestigungsschrauben verbinden zu können.

Die ausschließlich formschlüssige Verbindung vom Rinnenunterteil 6 und der Rinnenabdeckung 5 ist in den Figuren 4 und 5 dargestellt. Gemäß dieser Darstellung sitzt die Rinnenabdeckung 5 lediglich formschlüssig auf einer Zarge 17 des Rinnenunterteils 6 auf. Die Zarge 17 schließt die seitlichen Rinnenwandungen 9, 9' des Rinnenunterteils 6 oberseitig, also auf der der Rinnenwandung 5 zugewandten Seite ab. Dabei weisen die Seitenwände 7, 7' der Rinnenabdeckung 5 jeweils ein oder mehrere Hakenelemente 20 auf, die inwändig an der Zarge 17 derart anliegen, dass die sonst bestehende Querverschieblichkeit der Rinnenabdeckung 5 gegenüber dem Rinnenunterteil 6 zumindest weitgehend verhindert ist.

Darüber hinaus ist aus Figur 4 ersichtlich, dass das Rinnenunterteil 6 mit einer Außenverrippung 18 zur zusätzlichen Aussteifung versehen ist. Darüber hinaus zeigt Figur 4 Rohransatzstutzen 24, über die ebenfalls weitere Lüftungskanäle 3 strömungsdicht an das Rinnenunterteil 6 anschließbar sind.

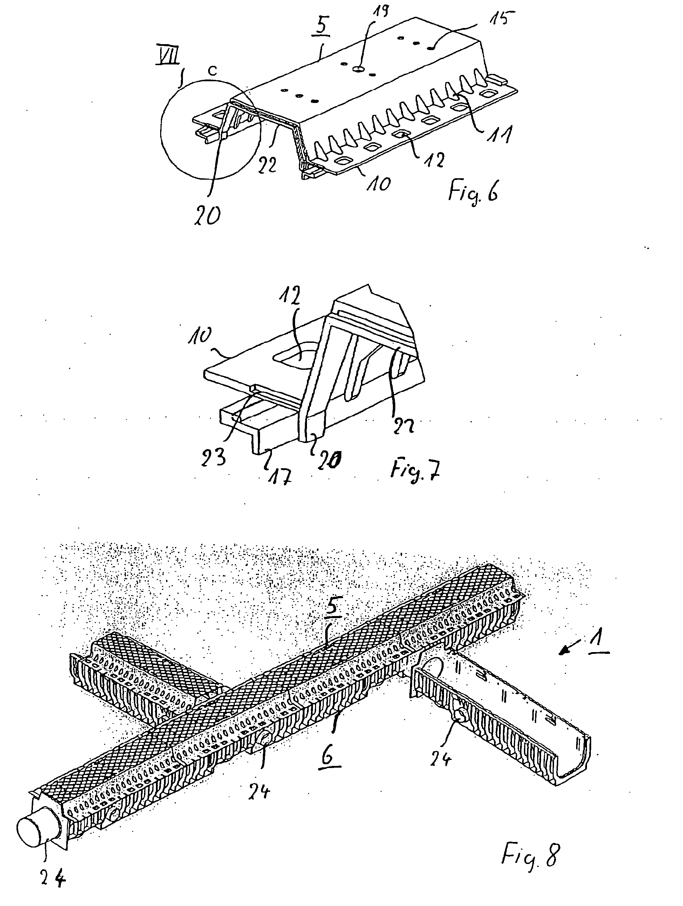

Gemäß der Detaildarstellung in den Figuren 6 und 7 ist die Stoßkante 22 der Rinnenabdeckung 5 so ausgebildet, dass im Bereich der Stoßkante 22 die nächste Rinnenabdeckung 5 unter Zwischenlage einer Dichtung angesetzt werden kann. Insbesondere die zurückspringende Rücksprungkante 22 stellt sicher, dass die Rinnenabdeckungen 5 untereinander strömungsdicht im Bereich der Stoßfuge verschlossen sind. Dabei können auch im Bereich der Seitenschürzen 10, 10' insbesondere im Überdeckungsbereich des Rinnenunterteils 6 Aussparungen 23 zur Zwischenlage von weiteren Dichtungselementen vorgesehen sein. Aus der Darstellung in Figur 6 ist überdies auch ein weiteres zentrales Schraubloch ersichtlich. Durch dieses Schraubloch kann die Rinnenabdeckung 5 mit einem darunter liegenden - hier nicht dargestellten - Knebelelement, das quer zum Rinnenunterteil 6 angeordnet ist, verbunden werden.

Nachdem mittels der Rinnenabdeckungen 5 eine vollständige Kraftübertragung der eingeleiteten Oberflächenkräfte in den Verlegegrund bzw. die Verlegeumgebung sichergestellt ist, kann die Dimensionierung der Rinnenunterteile 6 mehr oder minder entkoppelt von der jeweiligen Oberflächenlast erfolgen. Die Rinnenunterteile 6 können daher mit Vorteil aus Kunststoff gefertigt werden. Kunststoff hat gegenüber Metall den Vorteil gegenüber etwaig aggressiven Umgebungsmedien resistent und korrosionsfest ausgestaltet sein zu können. Darüber hinaus können die Kunststoffrinnen anders als die vorzugsweise aus Metallguss gefertigten Rinnenabdeckungen 5 bereits werkseitig mittels entsprechenden Schweißverbindungen verbunden sein. Die Stoßkanten der Rinnenabdeckungen 5 und Rinnenunterteile 6 untereinander müssen daher keinesfalls miteinander fluchten. Beispielsweise kann ein im Wege einer Schweißverbindung verlängertes einheitliches Rinnenunterteil 6 mit mehreren Rinnenabdeckungen 5 verschlossen sein. Die Rinnenunterteile 6 können schon deshalb länger ausgebildet sein, weil das geringere Gewicht der Kunststoffteile gegenüber den vorzugsweise aus Metall gefertigten Rinnenabdeckungen 5 ein entsprechend erleichterter Transport bzw. eine erleichterte Lagerung der Rinnenunterteile 6 ermöglicht.

Die Ausbildung eines kompletten Belüftungssystems 1 aus Belüftungskanälen 3 ist in Figur 8 dargestellt.

Die Rinnenunterteile 6 sind mit Rohranschlussstutzen 24 versehen, wobei derartige Rohranschlussstutzen 24 auch stirnseitig angesetzt sein können. Die Rohranschlussstutzen 24 werden über geeignete Reduzierstücke miteinander verbunden und somit eine Strömungsverbindung zwischen mehreren Rinnenunterteilen 6 hergestellt. Durch die entsprechende Gestaltung der Rinnenunterteile 6 mit seitlichen und/oder stirnseitigen Rohranschlussstutzen 24 kann ein nahezu beliebig verzweigtes Belüftungssystem 1 für eine Lagerfläche 2 aufgebaut werden. Dabei kann mittels der bereits werkseitig vorgefertigten Rohranschlussstutzen 24 unter Berücksichtigung der jeweiligen Verlegebedingungen das Belüftungssystem 1 vor Ort flexibel aufgebaut werden.

Vorstehend ist somit ein Belüftungssystem 1 mit Belüftungskanälen 3 beschrieben, die im Wesentlichen aus einem Rinnenunterteil 6 mit einer Rinnenabdeckung 5 bestehen, wobei die Rinnenabdeckung 5 derart ausgestaltet ist, dass Lasteinwirkungen vollständig auf den Verlegegrund bzw. die Verlegeumgebung abgeleitet wird. Hierdurch kann die Dimensionierung bzw. die Gestaltung des Rinnenunterteils 6 weitgehend von der Rinnenabdeckung 5 entkoppelt ausgelegt werden.

### BEZUGSZEICHENLISTE

- 1: Belüftungssystem
- 2: Lagerfläche
- 3: Belüftungskanal
- 4: Gebläse
- 5: Rinnenabdeckung
- 6: Rinnenunterteil
- 7,7': Seitenwandung
- 8: Stopfen
- 9,9': Rinnenwandungen
- 10,10': Seitenschürze
- 11,11': Aussteifungswinkel
- 12,12': Durchbrechung
- 13: Abdeckungsplatte
- 14: Profilierung
- 15: Lüftungsloch
- 16: Schraubschlitz
- 17: Rinnenzarge
- 18: Verrippung
- 20: Hakenelement
- 21: Halteelement
- 22: Rücksprungkante
- 23: Aussparung
- 24: Rohranschlussstutzen

## Patentansprüche

1. Belüftungssystem zur gesteuerten und/oder geregelten Belüftung von einem Trocknungsgut mit wenigstens einem diesem Trocknungsgut zugeordneten luftdurchströmbaren Belüftungskanal (3) mit einem Rinnenunterteil (6) und einer gelochten Abdeckung (5), deren Lochbild mittels verschließbarer Stopfen (8) veränderlich ist,
**dadurch gekennzeichnet, dass** die Abdeckung (5) des Belüftungskanals (3) beidseits jeweils mit seitlich ausgestellten Seitenschürzen (10, 10') zur Verbindung mit dem Verlegegrund und/oder der Verlegeumgebung versehen ist, wobei die Seitenschürzen (10, 10') bei bestimmungsgemäßer Montage der Abdeckung (5) jeweils außenseitig in Richtung des Verlegegrunds und/oder der Verlegeumgebung des Belüftungskanals (3) überstehen und derart lastabtragend ausgesteift ist, dass der Lasteintrag in den Verlegegrund und/oder die Verlegeumgebung des jeweiligen Belüftungskanals (3)erfolgt.

2. Belüftungssystem nach Anspruch 1, **dadurch gekennzeichnet, dass** ein Belüftungskanal im Wesentlichen von einem Rinnenunterteil (6) mit seitlichen Rinnenwandungen (9, 9') und einer Rinnenabdeckung (5) gebildet ist, wobei die Rinnenabdeckung (5) formschlüssig auf einer die Rinnenwandung (9, 9') jeweils gegenüber der Rinnenabdeckung (5) abschließenden Rinnenzarge (17) aufsitzt.

3. Belüftungssystem nach Anspruch 2, **dadurch gekennzeichnet, dass** die Rinnenabdeckung (5) einen zumindest im Wesentlichen U-förmigen Querschnitt besitzt, wobei die Offenseite des U-Profils dem Rinnenunterteil (6) bei bestimmungsgemäßer Montage der Rinnenabdeckung (5) zugewandt ist und die zwei das U-Profil beidseits einfassenden Seitenwänden (7, 7') der Rinnenabdeckung (5) an der Offenseite des erwähnten U-Profils in jeweils nach außengewandte Seitenschürzen (10, 10') übergehen und dabei auf der, der Offenseite der Abdeckung (5) gegenüberliegenden, Seite mit einer gelochten Abdeckplatte (13) gegenüber einem etwaigen Trocknungsgut abgeschlossen ist, wobei bei bestimmungsgemäßer Montage die Rinnenabdeckung (5) mit ihren Seitenschürzen (10, 10') zumindest mittelbar auf der Rinnenzarge (17) des Rinnenunterteils (6) aufsitzt und hierbei im Wesentlichen die gelochte Abdeckplatte (13) um die Breite der Seitenwände (7, 7') erhoben über dem Rinnenunterteil (6) angeordnet ist.

4. Belüftungssystem nach einem der vorhergehenden Ansprüche, **dadurch gekennzeichnet, dass** die Seitenwandungen (7, 7') der Rinnenabdeckung (5) gegenüber der Abdeckplatte (13) und den Seitenschürzen (10, 10') schräg angestellt sind, mithin keinen rechten Winkel ausbilden.

5. Belüftungssystem nach Anspruch 3 oder 4, **dadurch gekennzeichnet, dass** die Seitenschürzen (10, 10') im Bereich ihres seitlichen Überstandes über das Rinnenunterteil (6) mit Durchbrechungen (12, 12') versehen sind.

6. Belüftungssystem nach einem der vorhergehenden Ansprüche, **dadurch gekennzeichnet, dass** die Rinnenabdeckung (5) mit dem Rinnenunterteil (6) mittels einer Schraubverbindung fixiert wird, wobei die Verschraubung im Bereich der Seitenschürzen (10, 10') und/oder durch einen quer zur Längserstreckung des Rinnenunterteils (6) angeordneten Knebel, der vorzugsweise mittig mit der Abdeckplatte (13) der Rinnenabdeckung (5) verschraubt wird, ausgebildet ist.

7. Belüftungssystem nach einem der vorhergehenden Ansprüche, **dadurch gekennzeichnet, dass** mittels des Belüftungssystems (1) Luft durch die Löcher der Abdeckplatte (13) nach außen abgegeben und/oder durch die Löcher der Abdeckplatte (13) eingesaugt wird, wobei der Ort der jeweiligen Luftzufuhr mittels der die Löcher der Abdeckplatte (13) schließenden oder teilweise verschließenden Stopfen (8) veränderlich ist.

8. Belüftungssystem nach Anspruch 7, **dadurch gekennzeichnet, dass** zumindest ein Teil der in die Löcher der Abdeckplatte (13) einzusetzenden Stopfen (8) mit Zusatzlöchern zur Feinregulierung der Be- oder Entlüftung des Trocknungsgutes versehen sind.

9. Belüftungssystem nach einem der vorhergehenden Ansprüche, **dadurch gekennzeichnet, dass** das Rinnenunterteil (6) und die Rinnenabdeckung (5) aus einem unterschiedlichen Material hergestellt sind, wobei vorzugsweise die Rinnenabdeckung (5) aus Metall oder Betonguss gefertigt und das Rinnenunterteil (6) aus Kunststoff gefertigt ist und/oder Rinnenabdeckung und Rinnenunterteil (5 und 6) hinsichtlich ihrer Belastbarkeit unterschiedlich dimensioniert sind.

10. Belüftungssystem nach einem der vorhergehenden Ansprüche, **dadurch gekennzeichnet, dass** die aus Kunststoff hergestellten Rinnenunterteil (6) zueinander stirnseitig zur Ausbildung größerer Rinnenlängen luftdicht verbunden, insbesondere verschweißt sind.

11. Belüftungssystem nach einem der vorhergehenden Ansprüche, **dadurch gekennzeichnet, dass** die Übergänge von Rinnenunterteil (6) zu Rinnenunterteil (6) und Rinnenabdeckungsteil (5) zu Rinnenabdeckungsteil (5) stirnseitig in einem Stoßbereich jeweils unter Zwischenlage einer Dichtung ausgerichtet sind, soweit nicht der Übergang von Rinnenunterteil zu Rinnenunterteil (6) mittels einer Schweißnaht hergestellt ist.

12. Belüftungssystem nach einem der vorhergehenden Ansprüche, **dadurch gekennzeichnet, dass** das zur Ausbildung eines Belüftungskanals (3) eingesetzte Rinnenunterteil (6) mit einer Außen- und/oder einer Innenverrippung (18) versehen ist, wobei vorzugsweise zwischen den Rippen der Außenverrippung (18) des Rinnenunterteils (6) wenigstens eine Fußlasche quer zur Längserstreckung des Rinnenunterteils (6) angeordnet ist.

13. Belüftungssystem nach einem der vorhergehenden Ansprüche, **dadurch gekennzeichnet, dass** die Rinnenunterteile (6) im Bereich der Rinnenseitenwandungen (9,9') mit vorgefertigten Rohranschlussstutzen (24) zum Anschluss von Seitenabzweigungen für den jeweiligen Belüftungskanal (3) versehen sind und/oder die stirnseitigen Abschlusswände der Rinnenunterteile (6) mit weiteren Rohranschlussstutzen (24) zum Anschluss von weiteren Rinnenunterteilen versehen sind.

14. Belüftungssystem nach Anspruch 13, **dadurch gekennzeichnet, dass** zum Anschluss eines Rinnenunterteils (6) und/oder eines Seitenstranges über die Rohranschlußstutzen (24) und ggf. erforderliche Reduzierstücke, die Verbindungsstelle umschließende Muffen, vorzugsweise KG-Rohr-Doppelmuffen, eingesetzt sind.

15. Belüftungssystem nach einem der vorhergehenden Ansprüche, **dadurch gekennzeichnet, dass** die Rinnenunterteile (6) jeweils mit den Rinnenabdeckungen (5) unter Zwischenlage einer Dichtung, vorzugsweise eine Spritzdichtung verbunden sind, die jeweils mit den Querstößen von Rinnenabdeckungen (5) zu Rinnenunterteil (6) abschließen.

16. Belüftungssystem nach einem der vorhergehenden Ansprüche, **dadurch gekennzeichnet, dass** die Rinnenabdeckungen (5) mit zusätzlichen Revisionsöffnungen versehen sind und/oder das Belüftungssystem (1) an Revisionsschächten angeschlossen ist.

## Claims

1. A ventilation system for the controlled and/or regulated ventilation of a product to be dried, by means of at least one ventilation duct (3) being associated with the product to be dried, and being apt to be flowed through by air, with a bottom trough part (6) and a perforated cover (5), the hole pattern of which can be changed by means of closable plugs (8), **characterized in that** the cover (5) of the ventilation duct (3) is provided on both sides each with laterally protruding side skirts (10, 10') for connection with the solid bed and/or solid environment, with the side skirts (10, 10') each protruding on the outside in the direction of the solid bed and/or the solid environment of the ventilation duct (3) when the cover (5) is mounted as intended, and is stiffened in a load-transferring manner in such a way that the introduction of load occurs into the solid bed and/or the solid environment of the respective ventilation duct (3).

2. A ventilation system according to claim 1, **characterized in that** a ventilation duct is formed substantially by a bottom trough part (6) with lateral trough walls (9, 9') and a trough cover (5), with the trough cover (5) resting in an interlocking fashion on a trough frame (17) each closing off the trough wall (9, 9') against the trough cover (5).

3. A ventilation system according to claim 2, **characterized in that** the trough cover (5) has an at least substantially U-shaped cross section, with the open side of the U-profile facing the bottom trough part (6) when the trough cover (5) has been mounted as intended and the two side walls (7, 7') of the trough cover (5) enclosing the U-profile on both sides converge on the open side of the said U-profile into respectively outwardly facing side skirts (10, 10'), and is closed off on the side opposite to the open side of the cover (5) with a perforated cover plate (13) against a possible product to be dried, with the trough cover (5) with its side skirts (10, 10') resting at least indirectly on the trough frame (17) of the bottom trough part (6) in the case of mounting as intended, and in this connection substantially the perforated cover plate (13) being arranged over the bottom trough part (6) raised by the width of the side walls (7, 7').

4. A ventilation system according to one of the preceding claims, **characterized in that** the side walls (7, 7') of the trough cover (5) are inclined in relation to the cover plate (13) and the side skirts (10, 10'), and thus do not form a right angle.

5. A ventilation system according to claim 3 or 4, **characterized in that** the side skirts (10, 10') are provided with breakthroughs (12, 12') in the region of their lateral protrusion beyond the bottom trough part (6).

6. A ventilation system according to one of the preceding claims, **characterized in that** the trough cover (5) is fixed to the bottom trough part (6) by means of a screw connection, with the screw connection being arranged in the region of the side skirts (10, 10') and/or by a toggle which is arranged transversally to the longitudinal extension of the bottom trough part (6) and being screwed together preferably in the middle with the cover plate (13) of the trough cover (5).

7. A ventilation system according to one of the preceding claims, **characterized in that** the ventilation system is used to emit air through the holes of the cover plate (13) to the outside and/or suck it in through the holes of the cover plate (13), with the location of the respective air supply being changeable by means of the plugs (8) which close the holes of the cover plate (13) or partly seal the same.

8. A ventilation system according to claim 7, **characterized in that** at least a part of the plugs (8) to be inserted in the holes of the cover plate (13) is provided with additional holes for fine adjustment of the ventilation or aeration of the product to be dried.

9. A ventilation system according to one of the preceding claims, **characterized in that** the bottom trough part (6) and the trough cover (5) are made from a different material, with preferably the trough cover (5) being made of metal or concrete casts and the bottom trough part (6) being made of plastic and/or the trough cover and the bottom trough part (5 and 6) being differently dimensioned with respect to their load capacity.

10. A ventilation system according to one of the preceding claims, **characterized in that** the bottom trough parts (6) made of plastic are connected to one another on the face side in an air-tight manner, especially welded together, in order to form longer trough lengths.

11. A ventilation system according to one of the preceding claims, **characterized in that** the transitions from bottom trough part (6) to bottom trough part (6) and trough cover part (5) to trough cover part (5) are aligned on the face side in an abutment region respectively by interposing a seal, unless the transition from bottom trough part to bottom trough part (6) is produced by means of a weld seam.

12. A ventilation system according to one of the preceding claims, **characterized in that** the bottom trough part (6) used for forming a ventilation duct (3) is provided with an external and/or internal ribbing (18), with at least one base bracket being arranged transversally to the longitudinal extension of the bottom trough part (6) preferably between the ribs of the external ribbing (18) of the bottom trough part (6).

13. A ventilation system according to one of the preceding claims, **characterized in that** the bottom trough parts (6) are provided in the region of the side walls (9, 9') of the trough with prefabricated pipe connection pieces (24) for the connection of side branches for the respective ventilation duct (3) and/or the end walls of the bottom trough parts (6) on the face side are provided with further pipe connection pieces (24) for the connection of further bottom trough parts.

14. A ventilation system according to claim 13, **characterized in that** sleeves, preferably double sleeves for base drain pipes, are used for the connection of a bottom trough part (6) and/or a side branch via the pipe connection pieces (24) and optionally required reducers.

15. A ventilation system according to one of the preceding claims, **characterized in that** the bottom trough parts (6) are each connected with the trough covers (5) by interposing a seal, preferably a gland sealing ring, which each end with the transverse joints from trough cover (5) to bottom trough part (6).

16. A ventilation system according to one of the preceding claims, **characterized in that** the trough covers (5) are provided with additional inspection openings and/or the ventilation system (1) is connected to inspection shafts.

## Revendications

1. Système d'aération pour l'aération contrôlée et/ou régulée d'une matière à sécher avec au moins un conduit d'aération (3) associé à cette matière à sécher et pouvant être parcouru par un flux d'air, avec une partie inférieure formant rigole (6) et une couverture perforée (5), dont le motif de perforations peut être modifié au moyen de bouchons pouvant être fermés (8), **caractérisé en ce que** la couverture (5) du conduit d'aération (3) est munie des deux côtés respectivement de rebords latéraux (10, 10') dépassant latéralement en vue de la fixation au support de pose et/ou à l'environnement de pose, lesquels rebords latéraux (10, 10') chacun dépassant à l'extérieur, quand la couverture (5) est conformément montée, en direction du support de pose et/ou de l'environnement de pose du canal d'aération (3) et sont raidies en vue d'évacuer les charges de telle façon que les charges exercées sont introduites dans le support de pose et/ou l'environnement de pose du conduit d'aération (3) correspondant.

2. Système d'aération selon la revendication 1, **caractérisé en ce qu'**un conduit d'aération est formé pour l'essentiel d'une partie inférieure formant rigole (6) avec des parois de rigole latérales (9, 9') et d'une couverture de rigole (5), laquelle couverture de rigole (5) repose à forme finale sur un encadrement de rigole (17) qui respectivement termine la paroi de rigole (9, 9') vers la couverture de rigole (5).

3. Système d'aération selon la revendication 2, **caractérisé en ce que** la couverture de rigole (5) possède une section au moins pour l'essentiel en forme de U, le côté ouvert du profilé en U étant tourné vers la partie inférieure formant rigole (6) quand la couverture de rigole (5) est conformément montée et les deux parois latérales (7, 7') de la couverture de rigole (5) entourant le profilé en U des deux côtés ayant une transition sur le côté ouvert dudit profilé en U vers des rebords latéraux (10, 10') dirigés vers l'extérieur, et étant isolé d'une éventuelle matière à sécher sur le côté faisant face au côté ouvert de la couverture (5) par une plaque de couverture perforée (13) , la couverture de rigole (5) reposant au moins indirectement par ses rebords latéraux (10, 10'), quand le montage est conforme, sur l'encadrement de rigole (17) de la partie inférieure formant rigole (6), la plaque de couverture perforée (13) étant alors surélevée de la largeur des parois latérales (7, 7') au-dessus de la partie inférieure formant rigole (6).

4. Système d'aération selon l'une des revendications précédentes, **caractérisé en ce que** les parois latérales (7, 7') de la couverture de rigole (5) sont inclinées à l'oblique par rapport à la plaque de couverture (13) et aux rebords latéraux (10, 10') sans former un angle droit.

5. Système d'aération selon la revendication 3 ou 4, **caractérisé en ce que** les rebords latéraux (10, 10') sont munis d'ouvertures (12, 12') dans la région de leur dépassement latéral au-delà de la partie inférieure formant rigole (6).

6. Système d'aération selon l'une des revendications précédentes, **caractérisé en ce que** la couverture de rigole (5) est fixée avec la partie inférieure formant rigole (6) au moyen d'un vissage, lequel vissage est formé dans la région des rebords latéraux (10, 10') et/ou à travers une patte disposée transversalement par rapport à l'étendue longitudinale de la partie inférieure formant rigole (6), qui est de préférence vissée au milieu avec la plaque de couverture (13) de la couverture de rigole (5).

7. Système d'aération selon l'une des revendications précédentes, **caractérisé en ce que** l'air est évacuée par le système d'aération (1) vers l'extérieur à travers les trous de la plaque de couverture (13) et/ou est aspirée à travers les trous de la plaque de couverture (13), l'endroit de chaque arrivée d'air pouvant être modifié au moyen des bouchons (8) fermant ou fermant partiellement les trous de la plaque de couverture (13).

8. Système d'aération selon la revendication 7, **caractérisé en ce qu'** au moins une partie des bouchons (8) à introduire dans les trous de la plaque de couverture (13) est munie de trous supplémentaires pour l'ajustement fin de l'aération ou de l'extraction d'air de la matière à sécher.

9. Système d'aération selon l'une des revendications précédentes, **caractérisé en ce que** la partie inférieure formant rigole (6) et la couverture de rigole (5) sont fabriquées dans un matériau différent, la couverture de rigole (5) étant de préférence faite de métal ou de béton coulé et la partie inférieure formant rigole (6) de matière plastique, et/ou la couverture de rigole et la partie inférieure formant rigole (5 et 6) sont dimensionnées différemment en terme de résistance aux charges.

10. Système d'aération selon l'une des revendications précédentes, **caractérisé en ce que** les parties inférieures formant rigole (6) fabriquées en matière plastique sont assemblées de manière étanche à l'air, en particulier soudées, les unes aux autres sur leur front pour former de grandes longueurs de rigole.

11. Système d'aération selon l'une des revendications précédentes, **caractérisé en ce que** les transitions entre l'une partie inférieure formant rigole (6) et l'autre partie inférieure formant rigole (6) et entre l'une partie de couverture de rigole (5) et l'autre partie de couverture de rigole (5) sont orientées sur le front dans une zone d'aboutement en intercalant chaque fois un joint d'étanchéité, si la transition entre l'une partie inférieure formant rigole et l'autre partie inférieure formant rigole (6) n'est pas réalisée au moyen d'une soudure.

12. Système d'aération selon l'une des revendications précédentes, **caractérisé en ce que** la partie inférieure formant rigole (6) utilisée pour former un conduit d'aération (3) est munie de nervures extérieures et/ou intérieures (18), de préférence au moins une patte de pied étant disposée entre les nervures extérieures (18) de la partie inférieure formant rigole (6) transversalement par rapport à l'étendue longitudinale de la partie inférieure formant rigole (6).

13. Système d'aération selon l'une des revendications précédentes, **caractérisé en ce que** les parties inférieures formant rigole (6) sont munies dans la région des parois latérales de rigole (9, 9') de raccords de tube (24) préfabriqués pour le raccordement de ramifications latérales pour le conduit d'aération (3) en question et/ou les parois de terminaison frontales des parties inférieures formant rigole (6) sont munies d'autres raccords de tube (24) pour le raccordement d'autres parties inférieures formant rigole.

14. Système d'aération selon la revendication 13, **caractérisé en ce qu'**en vue du raccordement d'une partie inférieure formant rigole (6) et/ou d'une ramification sur les raccords de tube (24) et des réducteurs éventuellement nécessaires, des manchons entourant le point d'assemblage, de préférence des manchons de tuyau KG doubles, sont utilisés.

15. Système d'aération selon l'une des revendications précédentes, **caractérisé en ce que** les parties inférieures formant rigole (6) sont reliées chacune aux couvertures de rigole (5) en intercalant un joint d'étanchéité, de préférence un joint injecté, dont chacun est délimité par les aboutements des couvertures de rigole (5) sur la partie inférieure formant rigole (6).

16. Système d'aération selon l'une des revendications précédentes, **caractérisé en ce que** les couvertures de rigole (5) sont munies d'ouvertures de visite supplémentaires et/ou le système d'aération (1) est raccordé à des gaines de visite.
